## Europäisches Patentamt
## European Patent Office
## Office européen des brevets

(11) Numéro de publication : **0 363 240 B1**

(12)
# FASCICULE DE BREVET EUROPEEN

(45) Date de publication du fascicule du brevet :
**04.11.92 Bulletin 92/45**

(51) Int. Cl.⁵ : **B60P 1/44**

(21) Numéro de dépôt : **89402533.7**

(22) Date de dépôt : **15.09.89**

(54) Perfectionnements aux plates-formes pour hayons élévateurs.

(30) Priorité : **07.10.88 FR 8813192**

(43) Date de publication de la demande :
**11.04.90 Bulletin 90/15**

(45) Mention de la délivrance du brevet :
**04.11.92 Bulletin 92/45**

(84) Etats contractants désignés :
**BE DE FR GB IT NL**

(56) Documents cités :
**EP-A- 0 078 065**
**EP-A- 0 277 686**
**FR-A- 2 257 461**

(73) Titulaire : **ERHEL**
**32, Avenue de Stalingrad**
**F-21100 Dijon (FR)**

(72) Inventeur : **Hof, Christian Gabriel Roger**
**11, rue du Fontenis**
**F-21490 Ruffey-Les-Ecrirey (FR)**
Inventeur : **Guenon, Jean-Pierre**
**133 rue de Velars**
**F-21370 Plombières-Les-Dijon (FR)**

(74) Mandataire : **Loyer, Bertrand et al**
**Cabinet Pierre Loyer 77, rue Boissière**
**F-75116 Paris (FR)**

## Description

La présente invention est relative aux plates-formes de hayons élévateurs telles que définis dans le préambule de la présente revendication et connues par exemple du EP-A-0 277 686.

Les plates-formes de hayons élévateurs sont articulés aux bras de levage qui les soulèvent par des moyens leur permettant de demeurer parallèles à elles-mêmes pendant leur élévation. A cette fin, elles sont reliées auxdits bras de levage par une pièce triangulaire ou de section triangulaire comportant deux pivots : un pivot de liaison au bras de levage et un pivot assurant la liaison avec une ou plusieurs biellettes qui maintiennent le parallélisme du mouvement.

D'une façon générale, les plates-formes sont fixées à la pièce de liaison triangulaire mentionnée ci-dessus. Comme cette pièce doit avoir une épaisseur non négligeable pour respecter une distance nominale suffisante entre les deux pivots, il faut, lorsque cette pièce triangulaire repose sur le sol, qu'elle pivote sur elle-même pour que l'extrémité opposée de la plate-forme vienne en contact avec le sol. Dans ce cas, la section de la plate-forme est triangulaire, la base du triangle venant s'adapter à ladite pièce de liaison triangulaire. Il en résulte que, lorsque la plate-forme repose sur le sol elle a une pente importante (d'environ 1Ø% à 15%), ce qui constitue une gêne considérable pour l'opérateur, qui doit faire remonter cette pente à la charge puis la caler pour qu'elle ne redescende pas pendant la première phase du levage au cours de laquelle la plate-forme est ramenée en position horizontale par rotation de la pièce triangulaire de liaison.

On a proposé de fixer la plate-forme à la base de la pièce de liaison, mais cela présente le désavantage de nécessiter des découpes très importantes dans l'arrière du véhicule pour pouvoir amener la plate-forme au niveau du plancher des véhicules.

On a également proposé d'articuler la plate-forme sur un système de biellettes, la plate-forme étant plate (et non en triangle), ayant une épaisseur réduite avec une courte pente en bout et étant soulevée par un levier coudé, parallèlement à elle-même du fait des biellettes, jusqu'à venir en butée contre la pièce de liaison.

Cette disposition est satisfaisante mais elle est complexe donc onéreuse et fragile.

La présente invention concerne une plate-forme élévatrice plate, de faible épaisseur, avec une courte pente à son extrémité, caractérisée par le fait qu'elle est articulée à cette pièce de liaison triangulaire à deux pivots, au moyen d'un troisième pivot situé au troisième sommet du triangle, ladite plate-forme comportant une butée venant prendre appui sur une butée correspondante disposée sur la pièce triangulaire de liaison de sorte que la plate-forme se trouve en position horizontale lorsque ladite pièce de liaison arrive en fin de son mouvement de rotation préalable au levage.

A titre d'exemple non limitatif et pour faciliter la compréhension de l'invention, on a représenté aux dessins annexés :

Figure 1, une vue schématique, en élévation latérale, d'une plate-forme connue à section triangulaire;

Figures 2 et 3, deux vues schématiques, en élévation latérale, illustrant le fonctionnement d'une plate-forme connue à guidage par biellettes;

Figures 4 et 5 deux vues schématiques, en élévation latérale, illustrant une plate-forme selon l'invention et son fonctionnement.

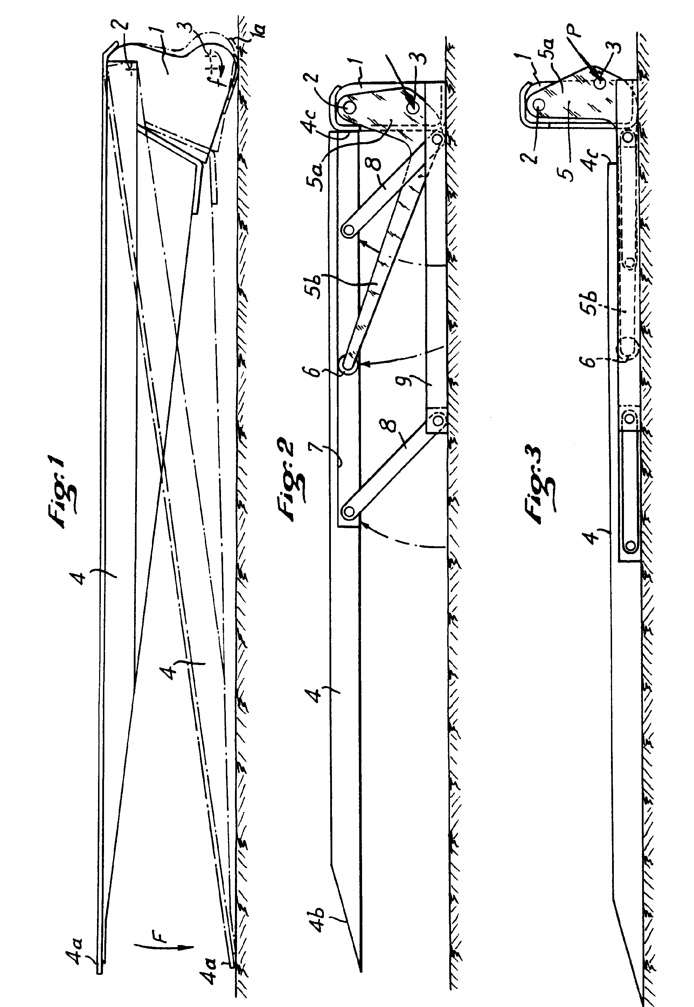

En se reportant à la figure 1, on voit que le dispositif usuel comporte une pièce triangulaire de liaison 1 comportant deux pivots 2 et 3. Le pivot supérieur 2 est relié à des bras de levage, non représentés, qui assurent l'élévation de la plate-forme parallèlement à elle-même tandis que le pivot 3 est relié au vérin d'inclinaison également non représenté. La plate-forme 4 est soudée à cette pièce triangulaire 1.

La plate-forme 4 a une section en triangle très aplati dont la base est reliée à la pièce triangulaire 1. Lorsque le sabot 1a de la pièce triangulaire est mis en contact avec le sol, la pièce 1 pivote autour du pivot 2 et la plate-forme 4 pivote selon la flèche F pour que son extrémité 4a vienne en contact avec le sol. La paroi supérieure de la plate-forme 4 est alors inclinée selon une pente de 1Ø% à 15%. Lors de l'opération de levage, le vérin d'inclinaison va d'abord pousser le pivot 3 selon la flèche f jusqu'à ce que la plate-forme 4 soit horizontale et ensuite la pièce de liaison va s'élever en entraînant la plate-forme 4. Il en résulte que l'opérateur doit d'abord pousser la charge tout le long de la pente de la plate-forme 4 puis la caler pour qu'elle ne bouge pas pendant la phase de redressement de la plate-forme.

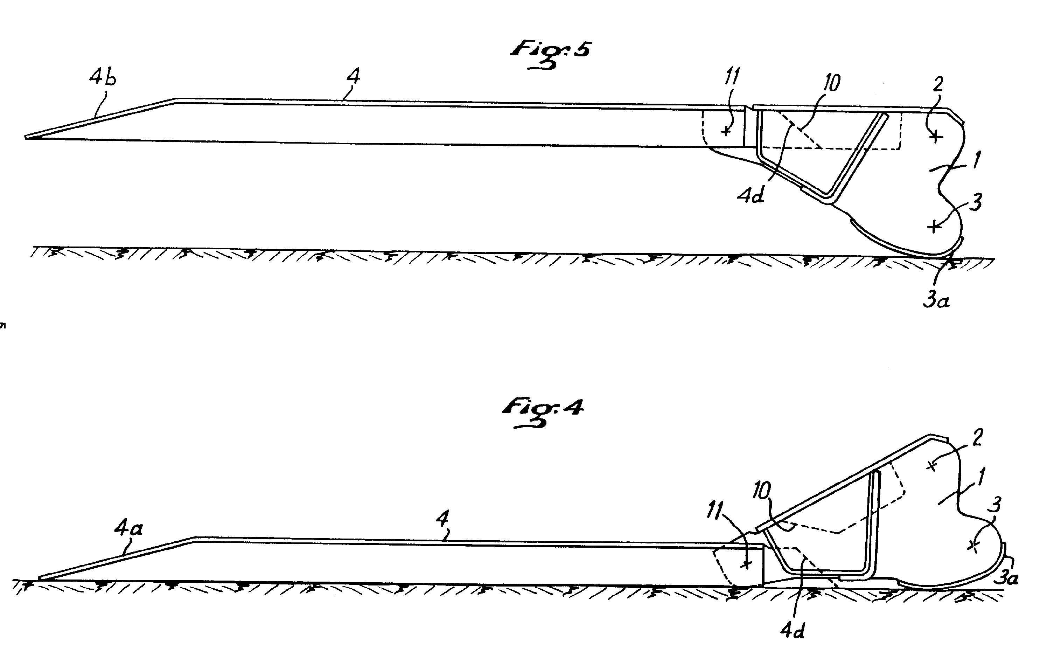

Pour éliminer cet inconvénient, on a proposé (figures 2 et 3) de réaliser la plate-forme de façon qu'elle soit plate (section rectangulaire de faible épaisseur), son extrémité comportant une courte pente 4b qui constitue un obstacle facile à franchir. La pièce de liaison 1 n'est plus triangulaire et comporte un seul pivot : le pivot supérieur 2. Sur ce pivot est également monté un levier 5 coudé en L qui porte, au voisinage de l'angle du L le pivot attelé au vérin d'inclinaison. La branche horizontale 5b du L est assez longue par rapport à la branche verticale 5a où se trouvent les deux pivots 2 et 3. A son extrémité, la branche 5 porte un galet 6 qui prend appui sur un chemin de roulement 7. La plate-forme 4 est attelée par deux bielles de même longueur 8 à une pièce de base 9 solidaire de la pièce de liaison 1. Ainsi, lorsque le vérin d'inclinaison agit sur le levier 5, la branche 5a de ce levier soulève la plate-forme 4 jusqu'à ce que son extrémité 4c vienne en butée contre la pièce de liaison 1, ce après quoi l'ensemble se soulève.

Cette disposition donne des résultats satisfaisants mais elle est complexe donc onéreuse et fragile.

En se reportant aux figures 4 et 5, on voit que la plate-forme selon l'invention est de forme analogue à celle des figures 2 et 3, c'est-à-dire qu'elle est plate, de section rectangulaire aplatie, et comporte à son extrémité une courte pente 4b. Elle est articulée par un pivot 11 au sommet de la pièce de liaison triangulaire 1 qui est analogue à celle dela figure 1. La plate-forme 4 comporte en outre une butée 4d destinée à coopérer avec une butée 1Ø portée par la pièce de liaison triangulaire 1. Lorsque le vérin d'inclinaison est actionné, il effectue une poussée sur le pivot 3, la pièce 1 pivote autour du pivot 2 et, par le pivot 11 soulève la plate-forme 4 par l'arrière jusqu'à ce que la butée 4d vienne en contact avec la butée 1Ø, la butée 4 ne peut plus alors pivoter par rapport à la pièce 1 et elle se relève jusqu'à l'horizontale comme illustré à la figure 5.

Cette disposition présente l'inconvénient qu'il faut caler la charge pour qu'elle ne bouge pas pendant la phase séparant les figures 4 et 5 mais il est facile de caler une charge quand elle est à plat.

## Revendications

1. Plate-forme pour hayon élévateur du type à section rectangulaire plate et ayant une courte pente (4b) à son extrémité, caractérisée par la fait qu'elle est articulée par un pivot (11) au sommet d'une pièce de liaison triangulaire (1) elle-même articulée par un pivot (2) à des bras de levage et par un pivot (3) à un vérin d'inclinaison, ladite plate-forme (4) comportant une butée (4d) venant prendre appui sur une butée correspondante (1Ø) portée par la pièce de liaison triangulaire (1), de telle sorte que lorsque le vérin (3) est actionné, la pièce de liaison (1) pivote autour du pivot (2) en soulevant l'arrière de la plate-forme (4) jusqu'à ce que celle-ci soit solidarisée à ladite pièce de liaison (1) par appui de la butée (1Ø) de la pièce de liaison.

## Patentansprüche

1. Plattform für eine Hub-Ladebordwand, mit einer im Querschnitt rechteckigen Platte, die an ihrem Ende eine kurze Schräge (4b) aufweist, **dadurch gekennzeichnet,**
   -daß sie mittels einer Schwenkachse (11) an der Spitze eines dreieckigen Verbindungsteils (1) angelenkt ist, welches seinerseits mittels einer Schwenkachse (2) an Hebearmen und mittels einer Schwenkachse (3) an einen Neigungszylinder angelenkt ist,

   -daß die Plattform (4) einen Anschlag (4d) aufweist, der an einem entsprechenden Anschlag (10) zur Anlage gelangt, welcher von dem dreieckigen Verbindungsteil (1) getragen wird, derart, daß wenn der Zylinder betätigt wird, das Verbindungsteil (1) sich um die Schwenkachse (2) dreht, wobei es den hinteren Teil der Plattform (4) so weit anhebt, bis diese aufgrund der Anlage an dem Anschlag (10) des Verbindungsteils mit letzterem gekoppelt ist.

## Claims

1. A platform for a lifting tailgate of the type having a flat rectangular section and having a short slope (4b) at its end, characterised in that it is articulated by a pivot (11) to the tip of a triangular connecting piece (1) which itself is articulated by a pivot (2) to lifting arms and by a pivot (3) to an inclining jack, said platform (4) comprising a stop (4d) which comes to bear against a corresponding stop (10) borne by the triangular connecting piece (1), such that when the jack (3) is actuated the connecting piece (1) pivots about the pivot (2), lifting the rear of the platform (4) until the latter becomes coupled with said connecting piece (1) by the stop (10) of the connecting piece bearing on it.

*Fig: 1*

*Fig: 2*

*Fig: 3*

EP 0 363 240 B1

*Fig. 5*

*Fig. 4*

EP 0 363 240 B1